# EUROPÄISCHE PATENTSCHRIFT

(11) **EP 4 247 516 B1**
(45) Veröffentlichungstag und Bekanntmachung des Hinweises auf die Patenterteilung: **23.04.2025**
(21) Anmeldenummer: 21790388.9
(22) Anmeldetag: 30.09.2021
(51) Int. Cl.: B01D 45/12, B01D 47/02

(54) **VORRICHTUNG UND VERFAHREN ZUM ABSCHEIDEN VON LEIMPARTIKELN AUS EINEM AEROSOL**
DEVICE AND METHOD OF SEPARATING GLUE PARTICLES FROM AEROSOLS
DISPOSITIF ET METHODE DE SEPARATION DE PARTICULES DE COLLE DANS DES AEROSOLS

(30) Priorität: 23.11.2020 DE 102020130922
(43) Veröffentlichungstag der Anmeldung: 27.09.2023
(73) Patentinhaber: Krones AG, 93073 Neutraubling (DE)
(72) Erfinder: BIELMEIER, Heinrich, 93073 Neutraubling (DE); NEUBAUER, Michael, 93073 Neutraubling (DE); APPEL, Christian, 93073 Neutraubling (DE)
(74) Vertreter: Grünecker Patent- und Rechtsanwälte PartG mbB
(86) Internationale Anmeldenummer: PCT/EP2021/076920
(87) Internationale Veröffentlichungsnummer: WO 2022/106104

(56) Entgegenhaltungen:
- EP-A1- 3 632 571
- WO-A1-2020/187461
- SE-A1- 1 851 202
- US-A- 5 053 082
- US-A1- 2006 086 253

## Beschreibung

Die Erfindung betrifft eine Vorrichtung und ein Verfahren zum Abscheiden von Leimpartikeln aus einem Leimaerosol sowie entsprechend ausgebildete Etikettieraggregate, Etikettiermaschinen und Etikettierverfahren.

Es ist allgemein bekannt, dass Etiketten für Behälter nicht nur mittels Leimwerken auf der Grundlage von Leimwalzen beleimt werden können, sondern auch berührungslos mittels Leimstrahlen, die beispielsweise von Vielzahl von Düsen eines Leimstrahldruckers ausgestoßen werden, ähnlich der Funktion eines Tintenstrahldruckers.

Dies hat jedoch den Nachteil, dass nicht alle ausgestoßenen Leimpartikel auf dem jeweiligen Etikett platziert werden können. Ein geringer Anteil der Leimpartikel wird beispielsweise durch Luftströmung weggetragen und erzeugt dadurch ein in der Umgebung des Leimstrahldruckers vagabundierendes Leimaerosol. Dies führt im Produktionsbetrieb auf Dauer zu beträchtlicher Verschmutzung umliegender Maschinenteile und verursacht eine entsprechend aufwändige Reinigung.

Zur Abscheidung von Leimpartikeln aus im Bereich von Heißleimwalzen aufgefangenen Aerosolen ist beispielsweise aus der DE 10 2019 203581 A1 eine Vorrichtung basierend auf einem Zyklonabscheider mit einem sich trichterförmig verjüngenden Abscheidebereich zur Führung einer Zyklonströmung und einem unterhalb des Zyklonabscheiders angeordneten Auffangbehälter zum Auffangen aus dem Zyklonabscheider herablaufender Leimpartikel bekannt.

In derartigen Zyklonabscheidern werden Partikel bekanntermaßen durch Zyklonströmung des Rohgases an der im Wesentlichen trichterförmigen Seitenwand abgeschieden und können von dort durch die Schwerkraft und/oder die Zyklonströmung getrieben zur sogenannten Entspannungskammer wandern, in der sich die Zyklonströmung beruhigt, sodass das durch die Abscheidung erzeugte Reingas im Zentrum der Zyklonströmung in entgegengesetzter Richtung abströmen kann. Die abgeschiedenen Partikel können in einem an die Entspannungskammer angeschlossen Auffangbehälter gesammelt werden.

Um eine funktionstüchtige Zyklonströmung aufrechtzuerhalten, muss der Zyklonabscheider im Bereich der Entspannungskammer und/oder des daran angeschlossenen Auffangbehälters luftdicht gegen die Umgebung abgedichtet sein. Zudem müssen die so aufgefangenen Partikel regelmäßig entfernt werden.

Zu diesem Zweck können aufgefangene Partikel prinzipiell über eine Zellradschleuse aus dem Zyklonabscheider ausgetragen werden. Dies ermöglicht zwar eine Entleerung im laufenden Arbeitsbetrieb des Zyklonabscheiders, ist jedoch technisch vergleichsweise aufwändig. Ferner bedingt dies bei abgeschiedenen Leimpartikeln aufgrund ihrer inhärenten Klebrigkeit eine schwierige und/oder häufige Reinigung derartiger Schleusen. Werden Auffangbehälter dagegen ohne derartige Schleusen angeschlossen und ausgewechselt, kann die Zyklonströmung nicht aufrechterhalten werden. In dieser Zeit ist somit eine Betriebsunterbrechung erforderlich.

Die US 2006/086253 A1 offenbart einen Zyklonabscheider, beispielsweise für ein Rauchgas, an dessen Innenwand eine Kühlflüssigkeit, die zudem abgeschiedene Partikel bindet, in einen unterhalb angeordneten Auffangbehälter läuft. Je nach Ausführungsform kann die Kühlflüssigkeit über einen Filter und eine Pumpe im Kreislauf zum Gaseingang des Abscheiders zurückgeführt werden. Das untere Ende des Zyklonabscheiders ist als Ablaufleitung ausgebildet und ragt nach unten in den oberen Bereich des Auffangbehälters. Je nach Füllhöhe kann die aufgefangene Kühlflüssigkeit die Ablaufleitung erreichen und die Ablaufleitung dadurch hydrostatisch abdichten. Der Zyklonabscheider umfasst eine in der Ablaufleitung angeordnete Drossel, die einen Rückstau für das Ausleiten des gereinigten Gases erzeugt und gleichzeitig ein Ablaufen der Kühlflüssigkeit durch die Drossel ermöglicht. Eine Absaugung für das gereinigte Gas ist nicht vorhanden, demzufolge im Arbeitsbetrieb ein Staudruck bzw. Überdruck oberhalb der Drossel herrscht, darunter im Wesentlichen der Umgebungsdruck.

Aus der US 5 053 082 A ist ein Zyklonabscheider bekannt, der am oberen Ende einer mit Lösemittel gefüllten Extraktionssäule angeordnet ist. Das Ablaufrohr des Zyklonabscheiders taucht im Arbeitsbetrieb in das Lösemittel zwecks Abdichtung ein, um einen nötigen Rückstau und Überdruck für den Abtransport des gereinigten Gases zu erzeugen.

Der Erfindung liegt die Aufgabe zugrunde, eine Vorrichtung und ein Verfahren zum Abscheiden von Leimpartikeln aus einem Leimaerosol anzugeben, die einen Austrag abgeschiedener und aufgefangener Leimpartikel mit möglichst geringem technischen Aufwand unter Beibehaltung eines kontinuierlichen Zyklonbetriebs, also Aufrechterhaltung einer funktionstüchtigen Zyklonströmung ermöglichen.

Die gestellte Aufgabe wird mit einer Vorrichtung gemäß Anspruch 1, damit ausgestatteten Etikettieraggregaten und Etikettiermaschinen sowie mit einem Verfahren gemäß Anspruch 8 gelöst.

Die Vorrichtung dient demnach zum Abscheiden von Leimpartikeln aus einem Leimaerosol und umfasst hierzu einen Zyklonabscheider mit einem sich trichterförmig insbesondere nach unten verjüngenden Abscheidebereich zur Führung einer Zyklonströmung und einen unterhalb des Zyklonabscheiders angeordneten Auffangbehälter zum Auffangen aus der Entspannungskammer herablaufender Leimpartikel.

Außerdem umfasst die Vorrichtung wenigstens eine mit dem Abscheidebereich insbesondere mittels einer Entspannungskammer gasdicht verbundene Ablaufleitung, die nach unten in den Auffangbehälter ragt, um den Zyklonabscheider ablaufseitig mittels eines im Auffangbehälter vorgehaltenen Lösemittels hydrostatisch abzudichten.

Die wenigstens eine Ablaufleitung besteht beispielsweise aus wenigstens einem Rohr und/oder Schlauch.

Die Leimpartikel sind im Wesentlichen fließfähig und/oder rieselfähig und ermöglichen dadurch ein schwerkraftgetriebenes Auffangen nach Zyklonabscheidung.

Das Lösemittel dient zur Aufnahme und zum Abtransport der Leimpartikel. Das Lösemittel ist beispielweise eine wässrige Reinigungslösung, im einfachsten Fall Wasser. Wässrige Lösungen eignen sich aufgrund ihrer relativ geringen Flüchtigkeit und der einfachen Entsorgung besonders gut. Prinzipiell sind aber auch andere Lösemittel denkbar, beispielsweise Alkohole oder andere organische Lösemittel.

Vorzugsweise ragt die Ablaufleitung in den Auffangbehälter bis unter einen vorgegebenen Mindestfüllstand des Lösemittels bei laufender Abscheidung / Zyklonströmung hinein. Der Ausgang der Ablaufleitung liegt im Arbeitsbetrieb durchweg unterhalb des Mindestfüllstands. Dadurch wird die Vorrichtung ablaufseitig hydrostatisch abgedichtet. Dies verhindert ein strömungstechnisch unerwünschtes Ansaugen von Fremdluft durch die Ablaufleitung und ermöglicht eine zuverlässige Abscheidung des Leims durch Zyklonströmung des Leimaerosols.

Vorzugsweise umfasst die Vorrichtung ferner eine an den Reingasausgang des Zyklonabscheiders angeschlossene Absaugung, wobei deren Saugleistung derart begrenzt und/oder geregelt ist, dass ein in der Ablaufleitung erzeugter Unterdruck das Lösemittel durch die Ablaufleitung nur so stark ansaugt, dass ein vorgegebener Mindestfüllstand des Lösemittels im Auffangbehälter außerhalb der Ablaufleitung nicht unterschritten wird.

Der Unterdruck in der Entspannungskammer und in der Ablaufleitung hebt den inneren Füllstand des Lösemittels in der Ablaufleitung über seinen äußeren Füllstand im umgebenden Auffangbehälter an. Dieser Niveauunterschied lässt sich so auf geeignete Weise unter Einhaltung des Mindestfüllstands einstellen.

Erfindungsgemäß umfasst der Auffangbehälter einen außerhalb der Ablaufleitung angeordneten / messenden Füllstandwächter zur Füllstandmessung des Lösemittels. Der Füllstand des Lösemittels im die Ablaufleitung umgebenden Auffangbehälter kann so laufend gemessen werden. Bei Unterschreiten eines zugehörigen Schwellenwerts, insbesondere des Mindestfüllstands, könnte ein Warnsignal ausgegeben werden, das zum manuellen Nachfüllen von Lösemittel auffordert oder ein entsprechendes maschinelles Nachfüllen automatisch auslöst.

Vorzugsweise umfasst der Auffangbehälter wenigstens einen Überlaufkanal für das Lösemittel, um einen Höchstfüllstand des Lösemittels vorzugeben und überschüssiges Lösemittel aus der Vorrichtung zu leiten. Beim Nachfüllen von frischem Lösemittel steigt der Füllstand zunächst gegebenenfalls bis zur Unterkante des Überlaufkanals. Dadurch kann mit Leimpartikeln beladenes / verbrauchtes Lösemittel geeignet verdünnt und bei weiterem Nachfüllen durch den Überlaufkanal abfließen und somit ersetzt werden.

Vorzugsweise ist der Auffangbehälter als Vertiefung in einer Lösemittelwanne ausgebildet, die zur Vertiefung / zum Auffangbehälter hin als Ablauf mit einem geeigneten Gefälle im Sinne eines Trichters oder dergleichen ausgebildet ist. Das Lösemittel kann dann beispielsweise manuell aus einem Vorratsbehälter in die Lösemittelwanne gegossen werden. Dort sammelt es sich (bei bestimmungsgemäßer Ausrichtung der Lösemittelwanne) durch Herablaufen im vertieften Auffangbehälter.

Vorzugsweise ist der Zyklonabscheider in aufrechter Lage angeordnet, und die Ablaufleitung ist mittig darunter und insbesondere koaxial mit dem Abscheidebereich angeordnet. Dies begünstigt eine zur Abscheidung geeignete Zyklonströmung, eine anschließende Strömungsberuhigung in der Entspannungskammer und ein schwerkraftgetriebenes Ablaufen der Leimpartikel.

Vorzugsweise umfasst die Vorrichtung ferner eine Abzugseinheit mit einer an den Rohgaseingang der Vorrichtung angeschlossenen Absaugleitung und insbesondere mit einer bezüglich der Absaugleitung eingangsseitig angeordneten Aerosolabschirmung, insbesondere in Form einer Abzugshaube, zur Abgrenzung eines Abzugsbereichs für das Leimaerosol.

Vorzugsweise ist die Vorrichtung gemäß wenigstens einer der voranstehend und/oder nachfolgend beschriebenen Ausführungsformen Bestandteil eines Etikettieraggregats zum Etikettieren von Behältern, insbesondere Flaschen. Das Etikettieraggregat umfasst dann ferner ein der Vorrichtung zugeordnetes Leimwerk, insbesondere in Form eines Leimstrahldruckers zum Ausstoß von Leim auf Etiketten für die Behälter, und eine Abzugseinheit, insbesondere wie voranstehend beschrieben, zum Absaugen des Aerosols aus einem Arbeitsbereich des Leimwerks. Beim Beleimen verursachte und im Arbeitsbereich vagabundierende Leimaerosole können auf diese Weise gezielt und mit relativ geringer Absaugleistung abgesaugt und darin enthaltene Leimpartikel wie beschrieben abgeschieden werden.

Vorzugsweise ist das Etikettieraggregat dann Bestandteil einer Etikettiermaschine, die ferner ein Behälterkarussell zum insbesondere kontinuierlichen Transport der Behälter bei der Übergabe der Etiketten an die Behälter umfasst.

Das beschriebene Verfahren dient zum Abscheiden von Leimpartikeln aus einem Leimaerosol. Dieses wird zu diesem Zweck durch einen sich trichterförmig insbesondere nach unten verjüngenden Abscheidebereich eines Zyklonabscheider geleitet. Dort mittels Zyklonströmung abgeschiedene Leimpartikel laufen / rieseln in einen unterhalb davon angeordneten Auffangbehälter herab.

Außerdem wird im Auffangbehälter ein Lösemittel für die Leimpartikel vorgehalten. Die Leimpartikel laufen / rieseln in einer mit dem Abscheidebereich insbesondere mittels einer Entspannungskammer gasdicht verbundenen Ablaufleitung in das Lösemittel herab. Dabei taucht die Ablaufleitung hydrostatisch abdichtend in das Lösemittel ein. Somit kann ein ablaufseitiges Ansaugen von Fremdluft durch die Ablaufleitung zuverlässig vermieden werden, um eine die Leimpartikel abscheidende Zyklonströmung aufrechtzuerhalten.

Vorzugsweise wird frisches Lösemittel zur Einhaltung eines Mindestfüllstands und/oder zu Ersatz beladenen / verbrauchten Lösemittels im Auffangbehälter maschinell und/oder über eine zum Auffangbehälter hin abfallende Lösemittelwanne manuell nachgefüllt.

Der Füllstand des Lösemittels im Auffangbehälter außerhalb der Ablaufleitung wird maschinell überwacht. Bei Annäherung an den Mindestfüllstand oder bei dessen Erreichen wird vorzugsweise ein Warnsignal ausgegeben oder ein maschinelles Nachfüllen des Lösemittels ausgelöst.

Vorzugsweise wird das Lösemittel zur Einhaltung eines Höchstfüllstands im Auffangbehälter und zum Abführen der Leimpartikel durch wenigstens einen Überlaufkanal ausgeleitet. Dies ermöglicht eine technisch einfach umzusetzende und zuverlässige Begrenzung des Füllstands.

Bei dem Verfahren wird zudem eine Absaugleistung für das aus der Abscheidung der Leimpartikel resultierende Reingas begrenzt und/oder geregelt, wobei: ein dabei in der Ablaufleitung erzeugter Unterdruck das Lösemittel dann nur so stark ansaugt, dass ein vorgegebener Mindestfüllstand des Lösemittels im Auffangbehälter außerhalb der Ablaufleitung nicht unterschritten wird; oder der Mindestfüllstand an die Absaugleistung entsprechend angepasst wird.

Vorzugsweise wird das im Auffangbehälter vorgehaltene Lösemittel unter Beibehaltung der Zyklonströmung im Zyklonabscheider zumindest teilweise durch frisches Lösemittel ersetzt. Dadurch lässt sich die Abscheidung der Leimpartikel kontinuierlich durchführen, also ohne Unterbrechung zwecks Austrag / Entsorgung der abgeschiedenen Leimpartikel

Vorzugsweise ist das beschriebene Verfahren Bestandteil eines Verfahrens zum Etikettieren von Behältern, wobei Etiketten insbesondere mittels Leimstrahldruck beleimt werden und dabei vagabundierend in die Umgebung abgegebene Leimaerosole abgesaugt und daraus Leimpartikel mit dem Verfahren gemäß wenigstens einer der voranstehend oder nachfolgend beschriebenen Ausführungsformen abgeschieden werden.

Das Leimaerosol enthält beispielsweise Kaltleimpartikel zur Etikettierung von Behältern. Denkbar sind aber prinzipiell beliebige Leimsorten und/oder Leimmischungen, die sich für eine Zyklonabscheidung eignen.

Eine bevorzugte Ausführungsform der Erfindung ist zeichnerisch dargestellt. Es zeigen:
- Figur 1: einen Längsschnitt durch die Vorrichtung;
- Figur 2: eine Detailansicht des Auffangbehälters; und
- Figur 3: eine schematische Draufsicht auf eine Etikettiermaschine mit der Vorrichtung.

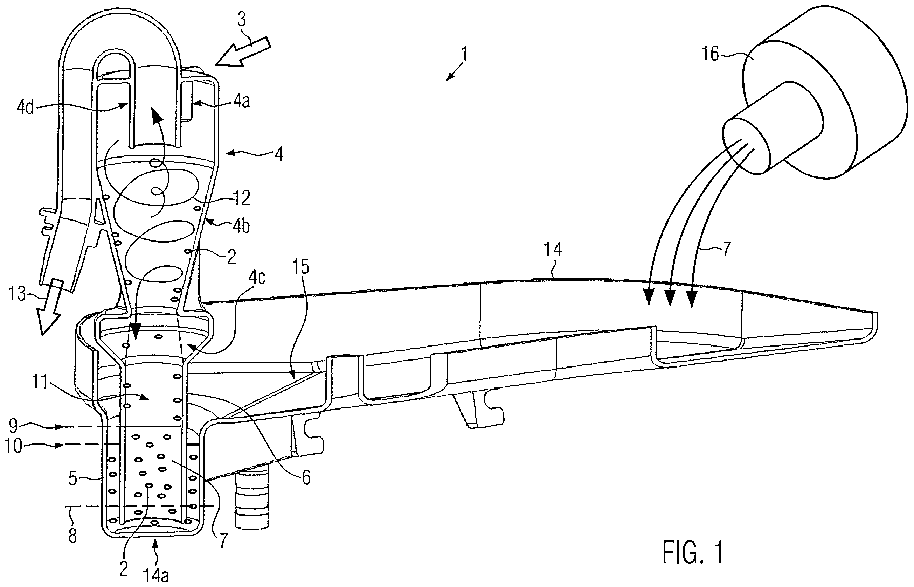

Wie die Figur 1 erkennen lässt, umfasst die Vorrichtung 1 zum Abscheiden von Leimpartikeln 2 aus einem Leimaerosol 3 einen Zyklonabscheider 4 mit einem Rohgaseingang 4a, einem sich trichterförmig verjüngenden Abscheidebereich 4b, einer daran anschließenden Entspannungskammer 4c und einem Reingasausgang 4d.

Diese Bestandteile des Zyklonabscheiders 4 sind hinsichtlich ihrer prinzipiellen Struktur und Funktion allgemein bekannt und daher in nicht im Detail erläutert. Die dargestellten Größenverhältnisse und Formgebung sind lediglich beispielhaft zu verstehen und können geeignet an die Eigenschaften des Leimaerosols 3 und seiner Leimpartikel 2 angepasst werden.

Die Vorrichtung 1 umfasst ferner einen unterhalb des Zyklonabscheiders 4 angeordneten Auffangbehälter 5 zum Auffangen der im Zyklonabscheider 4 abgeschiedenen und aus dem Abscheidebereich 4b und/oder dem Bereich der Entspannungskammer 4c herablaufenden Leimpartikel 2.

Die Vorrichtung 1 umfasst ferner eine nach unten hin an den Abscheidebereich 4b anschließende (in der Figur 1 gestrichelt angedeutet) oder an die Entspannungskammer 4c anschließende Ablaufleitung 6, die nach unten in den Auffangbehälter 5 hineinragt und den Zyklonabscheider 4 ablaufseitig mittels eines im Auffangbehälter 5 vorgehaltenen Lösemittels 7 hydrostatisch abdichtet.

Zu diesem Zweck taucht die Ablaufleitung 6 wenigstens bis unterhalb eines Mindestfüllstands 8 des Lösemittels 7 in dieses ein. Der Mindestfüllstand 8 betrifft einen die Ablaufleitung 6 unmittelbar umgebenden Bereich des Auffangbehälters 5.

Durch Einhaltung des Mindestfüllstands 8 des Lösemittels 7 im Auffangbehälter 5 wird ein unerwünschtes ablaufseitiges Ansaugen von Fremdluft durch die Ablaufleitung 6 verhindert.

In der Figur 1 sind ferner beispielhaft ein innerer Füllstand 9 des Lösemittels 7 in der Ablaufleitung 6 und ein äußerer Füllstand 10 des Lösemittels 7 außerhalb der Ablaufleitung 6 im laufenden Arbeitsbetrieb angedeutet. Demnach ist der innere Füllstand 9 aufgrund eines im Arbeitsbetrieb des Zyklonabscheiders 4 im Bereich der Entspannungskammer 4c und der Ablaufleitung 6 herrschenden Unterdrucks 11 höher als der äußere Füllstand 10, über dem im Wesentlichen der Umgebungsdruck herrscht.

In der Figur 1 ist ferner eine prinzipiell bekannte Zyklonströmung 12 schematisch angedeutet, mit der das Leimaerosol 3 im Sinne eines Rohgases schraubenförmig zur Entspannungskammer 4c strömt. Schematisch angedeutet ist ferner die Strömung eines nach Abscheidung der Leimpartikel 2 aus dem Leimaerosol 3 resultierenden Reingases 13.

Die Zyklonströmung 12 wird auf prinzipiell bekannte Weise durch Absaugung des Reingases 13 erzeugt. Die beschriebene hydrostatische Abdichtung der Ablaufleitung 6 dient hierbei der funktionstüchtigen Aufrechterhaltung der Zyklonströmung 12 und deren geeigneter Beruhigung in der Entspannungskammer 4c.

Wie die Figur 1 andeutet, ist die Ablaufleitung 6 vorzugsweise als ein koaxial an die Entspannungskammer 4c anschließendes Rohr ausgebildet. Denkbar wären aber auch mehrere von der Entspannungskammer 4c ausgehende Ablaufleitungen 6, ebenso die Ausbildung der wenigstens einen Ablaufleitung 6 in Form eines Schlauchs oder dergleichen. Ausschlaggebend ist, dass die jeweilige Ablaufleitung 6 zur Aufrechterhaltung der Zyklonströmung 12 bis unter den Mindestfüllstand 8 in das dort vorhandene Lösemittel 7 eintaucht.

Die Ablaufleitung 6 ist vorzugsweise Bestandteil des Zyklonabscheiders 4, also beispielsweise einstückig mit diesem ausgebildet oder anderweitig dauerhaft fest mit diesem verbunden. Es wäre aber auch denkbar, die Ablaufleitung 6 flüssigkeitsdicht und gasdicht am Zyklonabscheider 4 anzuflanschen, in einen daran vorhandenen korrespondierenden Sitz einzusetzen oder dergleichen.

In der Figur 1 ist ferner zu erkennen, dass der Auffangbehälter 5 vorzugsweise in eine Lösemittelwanne 14 integriert ist, die zum Auffangbehälter 5 hin mit einem geeigneten Gefälle 15 im Sinne eines Ablaufs für in die Lösemittelwanne 14 eingefülltes Lösemittel 7 abfällt. Frisches Lösemittel 7 kann dann beispielsweise manuell aus einem Vorratsbehälter 16 in die Lösemittelwanne 14 im laufenden Arbeitsbetrieb der Vorrichtung 1 nachgefüllt werden.

Ebenso wäre ein maschinelles Nachfüllen in den Auffangbehälter mittels einer Versorgungsleitung und Dosiereinrichtung (nicht dargestellt) für frisches Lösemittel 7 denkbar.

Der Auffangbehälter 5 ist vorzugsweise als Vertiefung 14a der Lösemittelwanne 14 ausgebildet und bildet dann vorzugsweise den bezüglich des Mindestfüllstand 8 tiefsten Bereich der Lösemittelwanne 14 zum entsprechenden Sammeln des Lösemittels 7 aus.

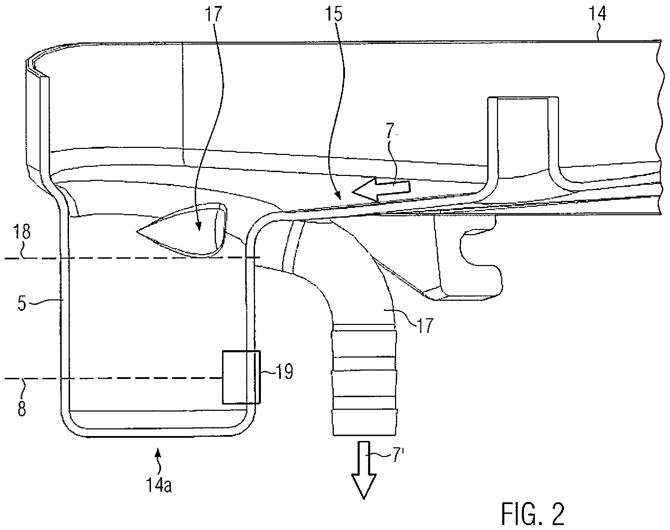

Wie die Figur 2 in einer Teilansicht der Vorrichtung 1 erkennen lässt, umfasst der Auffangbehälter 5 vorzugsweise einen Überlaufkanal 17 für überschüssiges Lösemittel 7'. Beim Nachfüllen frischen Lösemittels 7 ersetzt dieses zumindest teilweise im Auffangbehälter 5 vorhandenes, mit Leimpartikeln 2 beladenes Lösemittel 7, sobald ein von der Unterkante des Überlaufkanals 17 vorgegebener Höchstfüllstand 18 des Lösemittels 7 im Auffangbehälter 5 erreicht wird. Wird weiterhin frisches Lösemittel 7 nachgefüllt, so läuft mit Leimpartikeln 2 beladenes Lösemittel 7 in Form des schematisch angedeuteten überschüssigen Lösemittels 7' aus der Vorrichtung 1 ab.

Dieser Erneuerungsprozess für das in der Vorrichtung vorgehaltene Lösemittel 7 kann ohne Unterbrechung der Zyklonströmung 12, also im laufenden Arbeitsbetrieb der Vorrichtung 1 durchgeführt werden, wodurch auch eine ausreichende Reinigung / Spülung der Ablaufleitung 6 und des Auffangbehälters 5 gegeben ist und Betriebsunterbrechungen zwecks Entfernung von Leimpartikeln 2 aus der Vorrichtung 1 vermieden werden können.

Der Auffangbehälter 5 könnte zu diesem Zweck auch andere Strukturen aufweisen, beispielsweise eine im Wesentlichen flexible Wandstruktur im Sinne eines Beutels oder dergleichen. Ebenso könnte der Auffangbehälter 5 als im Rahmen von Instandhaltungsmaßnahmen auswechselbarer Bestandteil der Lösemittelwanne 14 ausgebildet sein.

Auch ist es denkbar, den Auffangbehälter 5 nicht als Bestandteil oder in Kombination mit der Lösemittelwanne 14 auszubilden. Beispielsweise könnte der Auffangbehälter 5 über eine Versorgungsleitung sowohl manuell als auch maschinell in geeigneten Zeitabständen direkt mit frischem Lösemittel 7 versorgt werden. Hierfür wären prinzipiell beliebige Dosiereinrichtungen für das Nachfüllen frischen Lösemittels 7 denkbar.

Ebenso wäre es denkbar, den äußeren Füllstand 10 mittels eines in der Figur 2 lediglich schematisch und beispielhaft angedeuteten Füllstandwächters 19 zu überwachen. Mit dem Füllstandwächter 19 ließe sich dann im Arbeitsbetrieb laufend feststellen, ob der äußere Füllstand 10 in geeigneter Weise über dem Mindestfüllstand 8 liegt. Ist dies nicht der Fall, beispielsweise bei Unterschreiten eines geeigneten Schwellenwerts für den äußeren Füllstand 10, kann eine Warnmeldung zum manuellen Nachfüllen frischen Lösemittels 7 ausgegeben werden oder ein entsprechendes Nachfüllen automatisch ausgelöst werden, beispielsweise über eine zugeordnete Dosiervorrichtung für das Lösemittel 7.

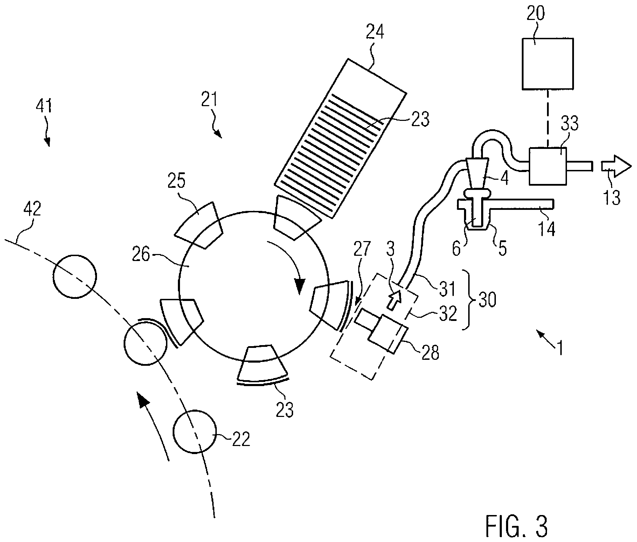

Wie die Figur 3 erkennen lässt, kann die Vorrichtung 1 eine elektronische Steuereinrichtung 20 zum Steuern und/oder Regeln der Leistung des Zyklonabscheiders 4 umfassen.

Die Figur 3 zeigt ferner schematisch eine Draufsicht auf ein Etikettieraggregat 21 zum Etikettieren von Behältern 22 mit Etiketten 23. Diese werden beispielsweise in einem Etikettenbehälter 24 stapelweise vorgehalten und auf prinzipiell bekannte Weise mittels Vakuumpaletten 25 einzeln aufgenommen. Die Vakuumpaletten 25 laufen an einem Palettenkarussell 26 auf prinzipiell bekannte Weise um und transportieren dabei die Etiketten 23 durch den Arbeitsbereich 27 eines Leimstrahldruckers 28.

Zur Absaugung des Leimaerosols 3 aus dem Arbeitsbereich 27 des Leimstrahldruckers 28 umfasst die Vorrichtung 1 dann vorzugsweise ferner eine Abzugseinheit 30 mit einer Absaugleitung 31 und einer Aerosolabschirmung 32, die beispielsweise im Sinne einer Abzugshaube ausgebildet sein kann.

Schematisch angedeutet ist ferner eine Absaugung (Absaugeinheit) 33 zum Ansaugen des Reingases 13, zum mittelbaren Absaugen des Leimaerosols 3 und zur Erzeugung der Zyklonströmung 12.

Denkbar wäre es aber auch, die Abzugseinheit 30 mit einer separaten Absaugung (nicht dargestellt) auszubilden, die dann stromaufwärts des Rohgaseingangs 4a des Zyklonabscheiders 4 angeordnet wäre.

Die Steuereinrichtung 20 regelt die Saugleistung der Absaugung 33 vorzugsweise so, dass ein geeigneter Unterdruck 11 im Bereich der Entspannungskammer 4c und/oder der Ablaufleitung 6 erzeugt wird. Dadurch lässt sich ein geeigneter Niveauunterschied zwischen dem inneren Füllstand 9 und dem äußeren Füllstand 10 einstellen, um den äußeren Füllstand 10 stets oberhalb des Mindestfüllstands 8 zu halten. Ein Unterschreiten des Mindestfüllstands 8 lässt sich so vermeiden.

Zudem könnte der in der Figur 2 dargestellte Füllstandwächter 19 an die Regeleinrichtung 20 angeschlossen sein, um ein Unterschreiten des Mindestfüllstands 8 zu vermeiden, beispielsweise durch Ausgabe geeigneter Warnmeldungen, Auslösen eines automatischen Nachfüllprozesses und/oder Anpassung der Absaugleistung.

In der Figur 3 ist ferner schematisch zu erkennen, dass das Etikettieraggregat 26 mit der beschriebenen Vorrichtung 1 vorzugsweise Bestandteil einer Etikettiermaschine 41 umlaufender Bauart ist, bei der die zu etikettierenden Behälter 22 auf einem Behälterkarussell 42 während der Übergabe der Etiketten 23 an die Behälter 22 kontinuierlich umlaufen. Derartige Etikettiervorgänge sind prinzipiell bekannt und daher nicht im Detail erläutert.

Die beschriebene Vorrichtung 1 und das beschriebene Verfahren ermöglichen eine im Wesentlichen kontinuierliche Etikettierung der Behälter 22 bei kontinuierlich rotierendem Palettenkarussell 26 und Behälterkarussell 42 mit unterunterbrochener Zyklonströmung 12 im Zyklonabscheider 4.

Hierbei ist ein Austrag der abgeschiedenen Leimpartikel 2 aus dem im Arbeitsbereich 27 des Leimstrahldruckers 28 aufgefangenen Leimaerosol 3 möglich, ohne den kontinuierlichen Etikettierungsbetrieb für eine Reinigung oder Entleerung des Auffangbehälters 5 unterbrechen zu müssen.

Die ablaufseitig hydrostatische Abdichtung des Zyklonabscheiders 4 ist mit konstruktiv einfach umzusetzenden und bei Instandhaltungsarbeiten gegebenenfalls einfach zu reinigenden und/oder zu ersetzenden Vorrichtungsbestandteilen möglich. Beispielsweise könnte die Lösemittelwanne 14 mit dem Auffangbehälter 5 auf vergleichsweise kostengünstige Weise gereinigt oder ersetzt werden. Ebenso wäre ein separater Ersatz des Auffangbehälters 5 und/oder der dazu passenden Ablaufleitung 6 im Rahmen von Instandhaltungsmaßnahmen, also außerhalb des regulären Produktionsbetriebs denkbar. Zudem weist die Ablaufleitung 6 keine beweglichen Bestandteile oder anderweitig gegebenenfalls schwierig zu reinigenden Oberflächen auf.

Somit ist eine kostengünstige und in der Praxis dauerhaft wartungsfreundlich einzusetzende Vorrichtung 1 für den Dauerbetrieb bei der Etikettierung von Behältern 22 gegeben.

## Patentansprüche

1. Vorrichtung (1) zum Abscheiden von Leimpartikeln (2) aus einem Leimaerosol (3), umfassend einen Zyklonabscheider (4) mit einem sich trichterförmig verjüngenden Abscheidebereich (4b) zur Führung einer Zyklonströmung (12), einen unterhalb des Zyklonabscheiders angeordneten Auffangbehälter (5) zum Auffangen aus dem Zyklonabscheider herablaufender Leimpartikel, eine mit dem Abscheidebereich gasdicht verbundene Ablaufleitung (6), die nach unten in den Auffangbehälter (5) ragt, um den Zyklonabscheider (4) ablaufseitig mittels eines im Auffangbehälter (5) vorgehaltenen Lösemittels (7) hydrostatisch abzudichten, indem die Ablaufleitung (6) wenigstens bis unterhalb eines Mindestfüllstands (8) des Lösemittels (7) in dieses eintaucht, und eine an den Reingasausgang (4d) des Zyklonabscheiders (4) angeschlossene Absaugung (33), wobei deren Saugleistung derart begrenzt und/oder geregelt ist, dass ein dadurch in der Ablaufleitung (6) erzeugter Unterdruck (11) das Lösemittel (7) durch die Ablaufleitung (6) nur so stark ansaugt, dass der Mindestfüllstand (8) des Lösemittels im Auffangbehälter (5) in einem die Ablaufleitung (6) unmittelbar umgebenden Bereich nicht unterschritten wird, und wobei der Auffangbehälter (5) einen außerhalb der Ablaufleitung (6) angeordneten / messenden Füllstandwächter (19) zur Füllstandmessung des Lösemittels (7) umfasst.

2. Vorrichtung nach Anspruch 1, wobei der Auffangbehälter (5) einen Überlaufkanal (17) für das Lösemittel (7) aufweist, um einen Höchstfüllstand (18) des Lösemittels vorzugeben und mit Leimpartikeln (2) beladenes / überschüssiges Lösemittel (2') aus der Vorrichtung (1) zu leiten.

3. Vorrichtung nach einem der vorigen Ansprüche, wobei der Auffangbehälter (5) als Vertiefung (14a) in einer Lösemittelwanne (14) ausgebildet ist, die zur Vertiefung hin ein Gefälle (15) aufweist.

4. Vorrichtung nach einem der vorigen Ansprüche, wobei der Zyklonabscheider (4) in aufrechter Lage angeordnet ist und die Ablaufleitung (6) mittig darunter und insbesondere koaxial bezüglich des Abscheidebereichs (4b) angeordnet ist.

5. Vorrichtung nach wenigstens einem der vorigen Ansprüche, ferner umfassend eine Abzugseinheit (30) mit einer an den Rohgaseingang (4a) des Zyklonabscheiders (4) angeschlossenen Absaugleitung (31) und insbesondere mit einer diesbezüglich eingangsseitig angeordneten Aerosolabschirmung (32), insbesondere Abzugshaube, zur Abgrenzung eines Absaugbereichs für das Leimaerosol (3).

6. Etikettieraggregat (21) zum Etikettieren von Behältern (22), insbesondere Flaschen, umfassend die Vorrichtung (1) nach wenigstens einem der vorigen Ansprüche, ein zugeordnetes Leimwerk (28), insbesondere in Form eines Leimstrahldruckers zum Ausstoß von Leim auf Etiketten (23) für die Behälter, und eine Abzugseinheit (30) zum Absaugen des Aerosols (3) aus einem Arbeitsbereich (27) des Leimwerks.

7. Etikettiermaschine (41) mit dem Etikettieraggregat (21) nach Anspruch 6 und mit einem Behälterkarussell (42) zum insbesondere kontinuierlichen Transport der Behälter (22) bei der Übergabe der Etiketten (23) an die Behälter.

8. Verfahren zum Abscheiden von Leimpartikeln (2) aus einem Leimaerosol (3) umfassend die Vorrichtung (1) nach wenigstens einem der Ansprüche 1-5, wobei dieses durch einen sich trichterförmig nach unten verjüngenden Abscheidebereich (4b) eines Zyklonabscheiders (4) geleitet wird und dort mittels Zyklonströmung (12) abgeschiedene Leimpartikel in einen unterhalb davon angeordneten Auffangbehälter (5) herablaufen, wobei im Auffangbehälter ein Lösemittel (7) für die Leimpartikel vorgehalten wird und diese in einer mit dem Abscheidebereich (4b) gasdicht verbundenen Ablaufleitung (6) in das Lösemittel (7) herablaufen, wobei die Ablaufleitung wenigstens bis unterhalb eines Mindestfüllstands (8) betreffend einen die Ablaufleitung (6) unmittelbar umgebenden Bereich des Auffangbehälters (5) hydrostatisch abdichtend in das Lösemittel (7) eintaucht, wobei der Füllstand (10) des Lösemittels (7) im Auffangbehälter (5) außerhalb der Ablaufleitung (6) maschinell überwacht wird, wobei eine Saugleistung für das nach Abscheidung der Leimpartikel (2) resultierende Reingas (3) begrenzt und/oder geregelt wird, und wobei: ein daraus in der Ablaufleitung (6) resultierender Unterdruck (11) das Lösemittel (7) nur so stark ansaugt, dass der Mindestfüllstand (8) des Lösemittels im Auffangbehälter (5) außerhalb der Ablaufleitung (6) nicht unterschritten wird.

9. Verfahren nach Anspruch 8, wobei frisches Lösemittel (7) zur Einhaltung eines Mindestfüllstands (8) im Auffangbehälter (5) maschinell und/oder über eine zum Auffangbehälter abfallende Lösemittelwanne (14) manuell nachgefüllt wird.

10. Verfahren nach Anspruch 8 oder 9, wobei das Lösemittel (7) zur Einhaltung eines Höchstfüllstands (18) im Auffangbehälter (5) und zum Abführen der Leimpartikel (2) durch wenigstens einen Überlaufkanal (17) ausgeleitet wird.

11. Verfahren nach einem der Ansprüche 8 bis 10, wobei das im Auffangbehälter (5) vorgehaltene Lösemittel (7) unter Beibehaltung der Zyklonströmung (12) im Zyklonabscheider (4) zumindest teilweise ersetzt wird.

12. Verfahren zum Etikettieren von Behältern (22), wobei Etiketten (23) insbesondere mittels Leimstrahldruck beleimt werden und ein dabei vagabundierend in die Umgebung abgegebenes Leimaerosol (3) abgesaugt und daraus Leimpartikel (2) mit dem Verfahren nach wenigstens einem der Ansprüche 8 bis 11 abgeschieden werden.

## Claims

1. A device (1) for separating glue particles (2) from a glue aerosol (3), comprising a cyclone separator (4) having a funnel-shaped tapering separating region (4b) for guiding a cyclone flow (12), a collecting container (5) arranged below the cyclone separator for collecting glue particles running out of the cyclone separator, a discharge line (6) connected in a gas-tight manner to the separating region and projecting downwards into the collecting container (5), to hydrostatically seal the cyclone separator (4) on the outlet side by means of a solvent (7) held in the collecting container (5), in that the outlet line (6) is immersed in the solvent (7) at least to below a minimum filling level (8) of the solvent (7), and a suction device (33) connected to the clean gas outlet (4d) of the cyclone separator (4), the suction power of which is limited and/or regulated in such a way that a vacuum (11) generated in the outlet line (6) draws the solvent (7) through the outlet line (6) only to such an extent that the minimum filling level (8) of the solvent in the collecting container (5) in an area directly surrounding the discharge pipe (6) is not undershot, and wherein the collecting container (5) comprises a level monitor (19) arranged/measuring outside the discharge pipe (6) for measuring the level of the solvent (7).

2. The device according to claim 1, wherein the collecting container (5) has an overflow channel (17) for the solvent (7) in order to predetermine a maximum filling level (18) of the solvent and to conduct glue particles (2) laden/excess solvent (2') out of the device (1).

3. The device according to one of the previous claims, wherein the collecting container (5) is formed as a recess (14a) in a solvent trough (14) which has a slope (15) towards the recess.

4. The device according to one of the previous claims, wherein the cyclone separator (4) is arranged in an upright position and the outlet line (6) is arranged centrally thereunder and in particular coaxially with respect to the separating region (4b).

5. The device according to at least one of the previous claims, further comprising an extraction unit (30) having an extraction line (31) connected to the raw gas inlet (4a) of the cyclone separator (4) and, in particular, having an aerosol shield (32), in particular an extraction hood, arranged on the inlet side with respect to the extraction line (31), for defining an extraction area for the glue aerosol (3).

6. A labeling unit (21) for labeling containers (22), in particular bottles, comprising the device (1) according to at least one of the previous claims, an associated gluing unit (28), in particular in the form of a glue jet printer for ejecting glue onto labels (23) for the containers, and an extraction unit (30) for extracting the aerosol (3) from a working area (27) of the gluing unit.

7. A labeling machine (41) with the labeling unit (21) according to claim 6 and with a container carousel (42) for, in particular, continuously transporting the containers (22) during the transfer of the labels (23) to the containers.

8. A method for separating glue particles (2) from a glue aerosol (3) comprising the device (1) according to at least one of claims 1-5, wherein the latter is passed through a downwardly funnel-shaped tapering separating region (4b) of a cyclone separator (4) and separated glue particles there run down into a collecting container (5) arranged thereunder by means of a cyclone flow (12), wherein a solvent (7) for the glue particles is provided in the collecting container and the glue particles run down into the solvent (7) in a discharge line (6) connected in a gas-tight manner to the separating region (4b), the outlet line being immersed in the solvent (7) in a hydrostatically sealing manner at least to below a minimum filling level (8) with respect to an area of the collecting container (5) directly surrounding the outlet line (6), wherein the filling level (10) of the solvent (7) in the collecting container (5) outside the discharge line (6) is monitored by machine, wherein a suction power for the clean gas (3) resulting after the separation of the glue particles (2) is limited and/or regulated, and wherein: a vacuum (11) resulting therefrom in the discharge line (6) draws in the solvent (7) only to such an extent that the minimum filling level (8) of the solvent in the collecting container (5) outside the discharge line (6) is not fallen below.

9. The method according to claim 8, wherein fresh solvent (7) is added to maintain a minimum level (8) in the collecting container (5) either mechanically and/or manually via a solvent trough (14) sloping down to the collecting container.

10. The method according to claim 8 or 9, wherein the solvent (7) is discharged through at least one overflow channel (17) to maintain a maximum filling level (18) in the collecting container (5) and to discharge the glue particles (2).

11. The method according to one of the claims 8 to 10, wherein the solvent (7) held in the collecting container (5) is at least partially replaced while maintaining the cyclone flow (12) in the cyclone separator (4).

12. A method for labeling containers (22), wherein labels (23) are glued, in particular by means of glue jet pressure, and a glue aerosol (3) that is thereby released into the environment in a stray manner is sucked off and glue particles (2) are deposited therefrom by means of the method according to at least one of claims 8 to 11.

## Revendications

1. Dispositif (1) permettant de séparer des particules de colle (2) à partir d'un aérosol de colle (3), comprenant un séparateur cyclonique (4) avec une région de séparation (4b) se rétrécissant en forme d'entonnoir et permettant de guider un écoulement cyclonique (12), un récipient collecteur (5) agencé en dessous du séparateur cyclonique et permettant de collecter des particules de colle s'écoulant du séparateur cyclonique, une conduite d'évacuation (6) reliée de manière étanche aux gaz à la région de séparation et faisant saillie vers le bas dans le récipient collecteur (5), afin d'étanchéifier de manière hydrostatique le séparateur cyclonique (4) du côté écoulement au moyen d'un solvant (7) stocké dans le récipient collecteur (5), la conduite d'évacuation (6) plongeant dans ledit récipient collecteur au moins jusqu'en dessous d'un niveau de remplissage minimal (8) du solvant (7), et une aspiration (33) raccordée à la sortie de gaz propre (4d) du séparateur cyclonique (4), dans lequel la puissance d'aspiration de ladite aspiration est limitée et/ou régulée de telle manière qu'une pression négative (11) générée dans la conduite d'évacuation (6) n'aspire le solvant (7) à travers la conduite d'évacuation (6) que suffisamment fort pour que le niveau de remplissage minimal (8) du solvant dans le récipient collecteur ne soit pas dépassé dans une région entourant directement la conduite d'évacuation (6), et dans lequel le récipient collecteur (5) comprend un dispositif de surveillance de niveau de remplissage (19) agencé à l'extérieur de la conduite d'évacuation (6) et permettant de mesurer le niveau de remplissage du solvant (7).

2. Dispositif selon la revendication 1, dans lequel le récipient collecteur (5) présente un canal de trop-plein (17) destiné au solvant (7), afin de définir un niveau de remplissage maximal (18) du solvant et de guider du solvant (2') chargé de/excédentaire en particules de colle (2) hors du dispositif (1).

3. Dispositif selon l'une quelconque des revendications précédentes, dans lequel le récipient collecteur (5) est réalisé sous la forme d'un renfoncement (14a) dans un bac à solvant (14) qui présente une pente (15) menant au renfoncement.

4. Dispositif selon l'une quelconque des revendications précédentes, dans lequel le séparateur cyclonique (4) est agencé en position verticale et la conduite d'évacuation (6) est agencée au milieu au-dessous et en particulier de manière coaxiale par rapport à la région de séparation (4b).

5. Dispositif selon au moins l'une quelconque des revendications précédentes, comprenant en outre une unité d'extraction (30) avec une conduite d'aspiration (31) raccordée à l'entrée de gaz brut (4a) du séparateur cyclonique (4) et en particulier avec une protection contre les aérosols (32), en particulier une hotte d'extraction, agencée côté entrée par rapport à celle-ci et permettant de délimiter une région d'aspiration pour l'aérosol de colle (3).

6. Groupe d'étiquetage (21) permettant d'étiqueter des récipients (22), en particulier des bouteilles, comprenant le dispositif (1) selon au moins l'une quelconque des revendications précédentes, une unité de collage (28) associée, en particulier sous la forme d'une imprimante à jet de colle permettant d'éjecter de la colle sur des étiquettes (23) destinées aux récipients, et une unité d'extraction (30) permettant d'aspirer l'aérosol (3) d'une région de travail (27) de l'unité de collage.

7. Étiqueteuse (41) comprenant le groupe d'étiquetage (21) selon la revendication 6 et comprenant un carrousel de récipients (42) permettant de transporter en particulier de manière continue les récipients (22) lors du transfert des étiquettes (23) sur les récipients.

8. Procédé de séparation de particules de colle (2) à partir d'un aérosol de colle (3), comprenant le dispositif (1) selon au moins l'une quelconque des revendications 1 à 5, dans lequel ledit aérosol de colle
est guidé à travers une région de séparation (4b), se rétrécissant vers le bas en forme d'entonnoir, d'un séparateur cyclonique (4) et des particules de colle séparées y tombent, au moyen de l'écoulement cyclonique (12), dans un récipient collecteur (5) agencé en dessous, dans lequel un solvant (7) destiné aux particules de colle est stocké dans le récipient collecteur et celles-ci tombent dans le solvant (7) par une conduite d'évacuation (6) reliée de manière étanche aux gaz à la région de séparation (4b), dans lequel la conduite d'évacuation plonge dans le solvant (7) de manière hydrostatiquement étanche au moins jusqu'en dessous d'un niveau minimal (8) en ce qui concerne une région du récipient collecteur (5) entourant directement la conduite d'évacuation (6), dans lequel le niveau de remplissage (10) du solvant (7) dans le récipient collecteur (5) est surveillé de manière mécanique à l'extérieur de la conduite d'évacuation (6), dans lequel une puissance d'aspiration du gaz propre (3) résultant de la séparation des particules de colle (2) est limitée et/ou régulée, et dans lequel : une pression négative (11) qui en résulte dans la conduite d'évacuation (6) n'aspire le solvant (7) que suffisamment fort pour que le niveau minimal (8) du solvant dans le récipient collecteur (5) ne soit pas dépassé à l'extérieur de la conduite d'évacuation (6).

9. Procédé selon la revendication 8, dans lequel le solvant (7) frais est versé de manière mécanique dans le récipient collecteur (5) et/ou de manière manuelle par l'intermédiaire d'une cuve de solvant (14) se déversant vers le récipient collecteur, afin de maintenir un niveau de remplissage minimal (8).

10. Procédé selon la revendication 8 ou 9, dans lequel le solvant (7) est évacué par au moins un canal de trop-plein (17) afin de maintenir un niveau de remplissage maximal (18) dans le récipient collecteur (5) et afin d'évacuer les particules de colle (2).

11. Procédé selon l'une quelconque des revendications 8 à 10, dans lequel le solvant (7) stocké dans le récipient collecteur (5) est remplacé au moins partiellement tout en conservant l'écoulement cyclonique (12) dans le séparateur cyclonique (4).

12. Procédé d'étiquetage de récipients (22), dans lequel des étiquettes (23) sont collées, en particulier par impression par jet de colle, et un aérosol de colle (3) errant libéré dans l'environnement est aspiré et des particules de colle (2) en sont séparées grâce au procédé selon au moins l'une quelconque des revendications 8 à 11.
